# EUROPEAN PATENT APPLICATION

(11) **EP 4 391 671 A1**
(43) Date of publication of application: **26.06.2024**
(21) Application number: 22858506.3
(22) Date of filing: 18.08.2022
(51) Int. Cl.: H04W 68/00, H04W 8/26

(54) **COMMUNICATION DEVICE, BASE STATION, AND COMMUNICATION METHOD**

(30) Priority: 20.08.2021 JP 2021135156
(71) Applicant: DENSO CORPORATION, Kariya-city, Aichi 448-8661 (JP); TOYOTA JIDOSHA KABUSHIKI KAISHA, Toyota-shi Aichi 471-8571 (JP)
(72) Inventor: NAGANO, Tatsuki, Kariya-city, Aichi 448-8661 (JP); TAKAHASHI, Hideaki, Kariya-city, Aichi 448-8661 (JP)
(74) Representative: TBK
(86) International application number: PCT/JP2022/031175
(87) International publication number: WO 2023/022188

(57) **Abstract**

A communication apparatus (100) comprises: a receiver (112) configured to receive, from a network (10), first information indicating a number of subgroups per paging occasion and second information related to a configuration of the subgroups based on a user equipment identity (UE_ID); and controller (120) configured to calculate the UE_ID using a designated calculation formula on a basis of the first information and the second information, and calculate a subgroup identifier on a basis of the UE_ID calculated using the designated calculation formula. The receiver monitors a paging occasion on a basis of the subgroup identifier.

## Description

### Cross-Reference to Related Applications

This application is based on and claims the benefit of priority of Japanese Patent Application No. 2021-135156, filed on August 20, 2021, the entire contents of which are incorporated herein by reference.

### Technical Field

The present disclosure relates to a communication apparatus, a base station, and a communication method used in a mobile communication system.

### Background Art

3GPP (registered trademark), which is a mobile communication system standardization project. The same applies hereinafter) (3rd Generation Partnership Project), there is a discussion for reducing power consumption for communication apparatuses in an RRC (Radio Resource Control) idle state or an RRC inactive state (see Non Patent Literature 1). Specifically, introduction of a mechanism for classifying each of a plurality of communication apparatuses allocated to the same paging occasion into any of a plurality of subgroups (hereinafter, referred to as a paging subgroup.) has been studied.

Before transmitting a paging message, the network notifies each communication apparatus of a paging subgroup to which the communication apparatus of the transmission destination of the paging message belongs. Only when it is determined that the communication apparatus in the RRC idle state or the RRC inactive state belongs to the notified paging subgroup, the communication apparatus performs reception processing (Specifically, receiving and decoding a physical downlink shared channel.) of the paging message and determines whether or not a unique identifier of the communication apparatus is included in the paging message. On the other hand, in a case where the communication apparatus determines that the communication apparatus does not belong to the notified paging subgroup, the communication apparatus can skip the reception processing of the paging message at the paging occasion, and thus, can reduce power consumption.

As a method for determining a paging subgroup to which a communication apparatus belongs, a method for determining a paging subgroup on the basis of a unique identifier of the communication apparatus (for example, 5G-S-TMSI) has been proposed. Specifically, the communication apparatus calculates a user equipment identity (UE ID) from its own unique identifier, and calculates a paging subgroup (specifically, a paging subgroup ID (UE subgroup ID)) to which the communication apparatus belongs from the calculated user equipment identity. As a formula for calculating the paging subgroup identifier from the user equipment identity, a formula "UE subgroup ID = floor (UE_ID/(N * Ns)) mod Nsg" has been proposed. N is a total number of paging frames (PF) in a discontinuous reception (DRX) cycle of the communications apparatus, Ns is a number of paging occasions per PF, and Nsg is a number of paging subgroups (specifically, a maximum number of paging subgroups per paging occasion in a cell).

Here, when the paging subgroup is calculated from the user equipment identity calculated using the formula "UE_ID = 5G-S-TMSI mod 1024" defined in the current technical specification of the 3GPP by using the above-described formula, in a case where the condition "N * Ns * Nsg > 1024" is fulfilled, all the communication apparatuses allocated to the same paging occasion belong to the same paging subgroup. Therefore, Non Patent Literature 2 describes that the user equipment identity is calculated by a formula "UE identity = 5G-S-TMSI mod 1024 * Nsg".

### Citation List

### Non Patent Literature

Non Patent Literature 1: 3GPP Contribution "RP-200938"
Non Patent Literature 2: 3GPP Contribution "R2-2106999"

### Summary of Invention

A communication apparatus according to a first aspect comprises: a receiver configured to receive, from a network, first information indicating a number of subgroups per paging occasion and second information related to a configuration of the subgroups based on a user equipment identity (UE_ID); and a controller configured to calculate the UE_ID using a designated calculation formula on a basis of the first information and the second information, and calculate a subgroup identifier on a basis of the UE_ID calculated using the designated calculation formula. The receiver monitors a paging occasion on a basis of the subgroup identifier.

Abase station according to a second aspect comprises: a transmitter configured to transmit, to a communication apparatus, first information indicating a number of subgroups per paging occasion and second information related to a configuration of the subgroups based on a user equipment identity (UE_ID); and a controller configured to calculate the UE_ID using a designated calculation formula on a basis of the first information and the second information, and calculate a subgroup identifier on a basis of the UE_ID calculated using the designated calculation formula. The transmitter transmits downlink control information on a physical link control channel in a paging occasion based on the subgroup identifier.

A communication method according to a second aspect is a communication method executed by a communication apparatus. The communication method comprises the steps of: receiving, from a network, first information indicating a number of subgroups per paging occasion, and second information related to a configuration of the subgroups based on a user equipment identity (UE_ID); calculating the UE_ID using a designated calculation formula on a basis of the first information and the second information, and calculating a subgroup identifier on a basis of the UE_ID calculated using the designated calculation formula; and monitoring a paging occasion on a basis of the subgroup identifier.

### Brief Description of Drawings

Objects, features, advantages, and the like of the present disclosure will become more apparent from the following detailed description with reference to the accompanying drawings.
Fig. 1 is a diagram illustrating a configuration of a mobile communication system according to an embodiment.
Fig. 2 is a diagram illustrating a configuration example of a protocol stack in the mobile communication system according to an embodiment.
Fig. 3 is a diagram illustrating paging sub-grouping.
Fig. 4 is a diagram illustrating an operation example of a UE in an RRC idle state or an RRC inactive state.
Fig. 5 is a diagram for describing an example of a formula for calculating PF, PO, and SFN.
Fig. 6 is a diagram illustrating a configuration of a UE according to an embodiment.
Fig. 7 is a diagram illustrating a configuration of a base station according to the embodiment.
Fig. 8 is a sequence diagram for explaining a first operation example according to one embodiment.
Fig. 9 is a flowchart for explaining a first operation example according to the embodiment.
Fig. 10 is a diagram for describing an example of a formula for calculating a user equipment identity in the first operation example according to the embodiment.
Fig. 11 is a flowchart for explaining a second operation example and a third operation example according to the embodiment.
Fig. 12 is a diagram for explaining an example of a formula for calculating a user equipment identity in the second operation example according to the embodiment.
Fig. 13 is a diagram for explaining an example of a formula for calculating a user equipment identity in the third operation example according to the embodiment.

### Description of Embodiments

A mobile communication system according to an embodiment will be described with reference to the drawings. In the description of the drawings, the same or similar parts are denoted by the same or similar reference numerals.

In a case where a user equipment identity is calculated by the formula described in NPL 2, compared with the calculation method by the formula defined in the current technical specification of 3GPP, the number of user equipment identities increases, so that the number of bits required to indicate the user equipment identity increases. As a result, there is a problem that an information amount of the user equipment identity increases, for example, when the user equipment identity is conveyed between base stations. Therefore, an object of the present disclosure is to provide a communication apparatus, a base station, and a communication method capable of suppressing an increase in an information amount of a user equipment identity in a mobile communication system capable of classifying each of a plurality of communication apparatuses allocated to the same paging occasion into any of a plurality of paging subgroups.

### (Configuration of Mobile Communication System)

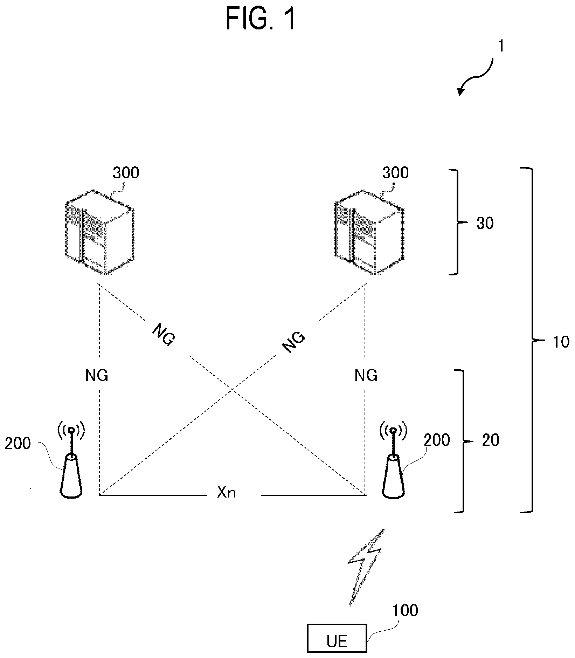

A configuration of a mobile communication system 1 according to the embodiment will be described with reference to Fig. 1. The mobile communication system 1 is, for example, a system conforming to a technical specification (TS) of 3GPP (3rd Generation Partnership Project). Hereinafter, as the mobile communication system 1, a description will be given, as an example, as to the 5th generation system (5GS) of the 3GPP standard, that is, a mobile communication system based on NR (New Radio).

The mobile communication system 1 includes a network 10 and a user equipment (UE) 100 that communicates with the network 10. The network 10 includes a NG-RAN (Next Generation Radio Access Network) 20, which is a 5G radio access network, and a 5GC (5G Core Network) 30, which is a 5G core network.

The UE 100 is an example of a communication apparatus. The UE 100 is an example of a communication apparatus. The UE 100 may be a mobile radio communication apparatus. The UE 100 may be an apparatus used by a user. The UE 100 is, for example, a mobile apparatus such as a mobile phone terminal such as a smartphone, a tablet terminal, a notebook personal computer (PC), a communication module, or a communication card. The UE 100 may be a vehicle (for example, a car, a train, or the like) or an apparatus (for example, a vehicle UE) provided in the vehicle. The UE 100 may be a transport body other than a vehicle (for example, a ship, an airplane, an air vehicle, or the like) or an apparatus provided in the transport body. The UE 100 may be a sensor or an apparatus provided in the sensor. The UE 100 may be referred to as another name such as a mobile station, a mobile terminal, a mobile apparatus, a mobile unit, a subscriber station, a subscriber terminal, a subscriber apparatus, a subscriber unit, a wireless station, a wireless terminal, a wireless apparatus, a wireless unit, a remote station, a remote terminal, a remote apparatus, or a remote unit.

The NG-RAN 20 includes a plurality of base stations 200. Each of the base stations 200 manages at least one cell. A cell forms a minimum unit of a communication area. For example, one cell belongs to one frequency (carrier frequency) and is constituted by one component carrier. The term "cell" may represent a radio communication resource, and may also represent a communication target of a UE 100. Each base station 200 can perform radio communication with a UE 100 existing in its own cell. The base station 200 communicates with a UE 100 by using a protocol stack of the RAN. The base station 200 provides NR user plane and control plane protocol terminations towards the UE 100 and is connected to a 5GC 30 via an NG interface. Such an NR base station 200 may be referred to as a gNodeB (gNB).

The 5GC 30 includes a core network apparatus 300. The core network apparatus 300 includes, for example, an AMF (Access and Mobility Management Function) and/or a UPF (User Plane Function). The AMF performs mobility management of the UE 100. The UPF provides a function specialized for user plane processing. The AMF and the UPF are connected to the base station 200 via the NG interface.

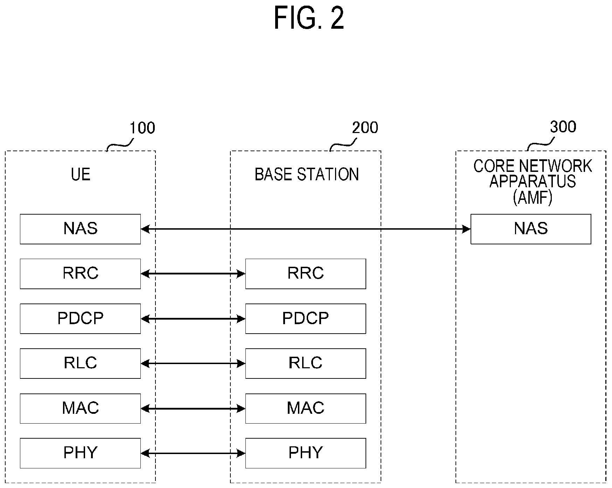

Next, a configuration example of a protocol stack in the mobile communication system 1 according to the embodiment will be described with reference to Fig. 2.

A protocol of a radio section between the UE 100 and the base station 200 includes a physical (PHY) layer, a MAC (Medium Access Control) layer, an RLC (Radio Link Control) layer, a PDCP (packet data convergence protocol) layer, and an RRC (Radio Resource Control) layer.

The PHY layer performs encoding and decoding, modulation and demodulation, antenna mapping and demapping, and resource mapping and demapping. Data and control information are transmitted between the PHY layer of the UE 100 and the PHY layer of the base station 200 via a physical channel.

The physical channel includes a plurality of OFDM (Orthogonal Frequency Division Multiplexing) symbols in the time domain and a plurality of subcarriers in the frequency domain. One subframe includes a plurality of OFDM symbols in the time domain. A resource block is a resource allocation unit, and includes a plurality of OFDM symbols and a plurality of subcarriers. A frame can be composed of 10 ms, and can include 10 subframes composed of 1 ms. A number of slots corresponding to a subcarrier spacing can be included in the subframe.

Among the physical channels, a physical downlink control channel (PDCCH) plays a central role for purposes such as, for example, downlink scheduling allocation, uplink scheduling grant, and transmission power control.

In the NR, the UE 100 can use a bandwidth narrower than a system bandwidth (that is, the bandwidth of the cell). The base station 200 configures a bandwidth part (BWP) of consecutive PRBs for the UE 100. The UE 100 transmits and receives data and a control signal in an active BWP. In the UE 100, for example, a maximum of four BWPs can be configured. The BWPs may have different subcarrier spacings or may have frequencies overlapping each other. In a case where a plurality of BWPs are configured for the UE 100, the base station 200 can designate which BWP is to be activated by control in downlink. As a result, the base station 200 can dynamically adjust a UE bandwidth according to the amount of data traffic of the UE 100 and the like, and can reduce the UE power consumption.

The base station 200 can, for example, configure a maximum of 3 control resource sets (CORESET) for each of a maximum of 4 BWPs on a serving cell. The CORESET is a radio resource for control information to be received by the UE 100. A maximum of 12 CORESETs can be configured on the serving cell for the UE 100. Each CORESET has an index of 0 to 11. For example, the CORESET includes six resource blocks (PRB) and one, two, or three consecutive OFDM symbols in the time domain.

The MAC layer performs data priority control, retransmission processing by hybrid ARQ (HARQ), a random access procedure, and the like. Data and control information are transmitted, via a transport channel, between the MAC layer of the UE 100 and the MAC layer of the base station 200. The MAC layer of the base station 200 includes a scheduler. The scheduler determines uplink and downlink transport formats (transport block size and modulation and coding scheme (MCS)) and resources to be allocated to the UE 100.

The RLC layer transmits data to the RLC layer on a reception side using the functions of the MAC layer and the PHY layer. Data and control information are transmitted between the RLC layer of the UE 100 and the RLC layer of the base station 200 via a logical channel.

The PDCP layer performs header compression and decompression and encryption and decryption.

A SDAP (Service Data Adaptation Protocol) layer may be provided as an upper layer of the PDCP layer. The SDAP (Service Data Adaptation Protocol) layer performs mapping between an IP flow that is a unit in which a core network performs QoS (Quality of Service) control, and a radio bearer that is a unit in which an AS (Access Stratum) performs QoS control.

The RRC layer controls the logical channel, the transport channel, and the physical channel according to establishment, reestablishment, and release of the radio bearer. RRC signaling for various configurations is transmitted between the RRC layer of the UE 100 and the RRC layer of the base station 200. In a case where there is an RRC connection between the RRC of the UE 100 and the RRC of the base station 200, the UE 100 is in an RRC connected state. In a case where there is no RRC connection between the RRC of the UE 100 and the RRC of the base station 200, the UE 100 is in an RRC idle state. In a case where an RRC connection between the RRC of the UE 100 and the RRC of the base station 200 is suspended, the UE 100 is in an RRC inactive state.

ANAS layer located above the RRC layer performs session management and mobility management of the UE 100. NAS signaling is transmitted between the NAS layer of the UE 100 and the NAS layer of the core network apparatus 300 (AMF). Note that the UE 100 has an application layer and the like in addition to a protocol of a radio interface.

### (Assumed Scenario)

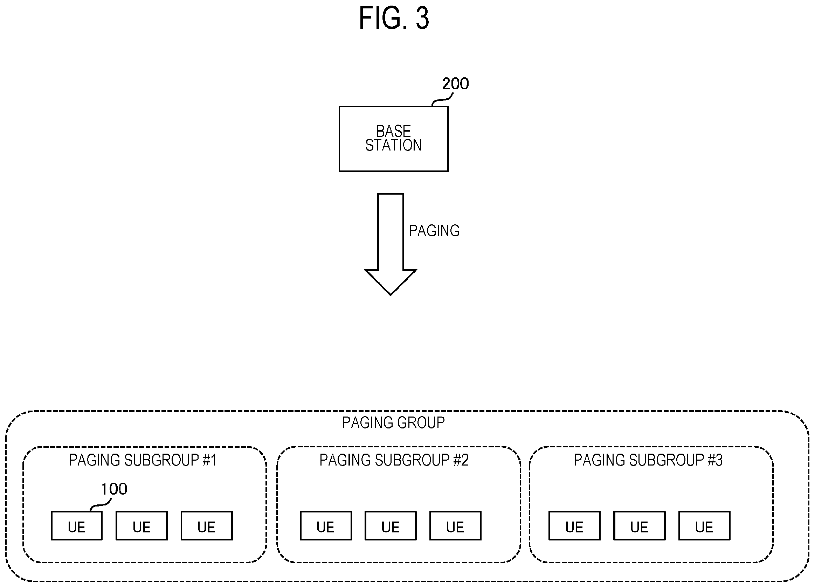

An assumed scenario in the mobile communication system 1 according to the embodiment will be described with reference to Figs. 3 to 5.

For paging reception, a paging message transmitted by the network 10 (base station 200) includes an identifier of each UE 100 invoked by the network 10.

The UE 100 in the RRC idle state or the RRC inactive state intermittently monitors paging using discontinuous reception (DRX) in order to reduce power consumption. A cycle of monitoring such paging is referred to as a DRX cycle. In addition, a frame in which the UE 100 should monitor paging is referred to as a paging frame (PF), and a subframe in which the UE 100 should monitor paging in the PF is referred to as a paging occasion (PO). In the PO, the UE 100 may receive a paging message.

The UE 100 in the RRC idle state or the RRC inactive state wakes up in the PO, monitors the paging message, and performs reception processing (Specifically, receiving and decoding a physical downlink shared channel (PDSCH).) of the paging message. The UE 100 that has performed the reception processing determines whether or not its own unique identifier is included in the paging message. In a case where the identifier of the UE 100 is included in the paging message, the UE regards that there is a call and performs an operation of transitioning to the RRC connected state, for example.

As described above, in the paging reception operation, all the UEs 100 to which the same PO is allocated wake up in the PO and perform paging monitoring and paging message reception processing. A UE group to which the same PO is allocated is referred to as a paging group. Here, since the UE 100 that is not actually called from the network 10 also wakes up and performs the paging message reception processing, extra power consumption occurs.

Therefore, each of the plurality of UEs 100 allocated to the same PO is classified (that is, grouping) into any of a plurality of subgroups (hereinafter, paging subgroup (PSG)) of units smaller than the paging group. Fig. 3 illustrates an example of dividing a paging group into three paging subgroups of paging subgroup IDs "#1" to "#3". Although an example in which the number of UEs 100 belonging to each paging subgroup is 3 is illustrated, the number of UEs 100 belonging to each paging subgroup may be 1, 2, or 4 or more.

As a grouping method of each UE 100 allocated to the same PO, a first grouping method (so-called CN-assigned subgrouping) in which the network 10 allocates a paging subgroup ID to each UE 100 and a second grouping method (so-called UE_ID based subgrouping) in which the UE 100 itself determines a paging subgroup have been studied.

In the first grouping method, the allocation of the paging subgroup ID to each UE 100 may be performed, for example, at the time of network registration of the UE 100. The network 10 allocates the paging subgroup ID according to characteristics (For example, paging probability, power consumption profile, and/or mobility state, etc.) of the UE 100.

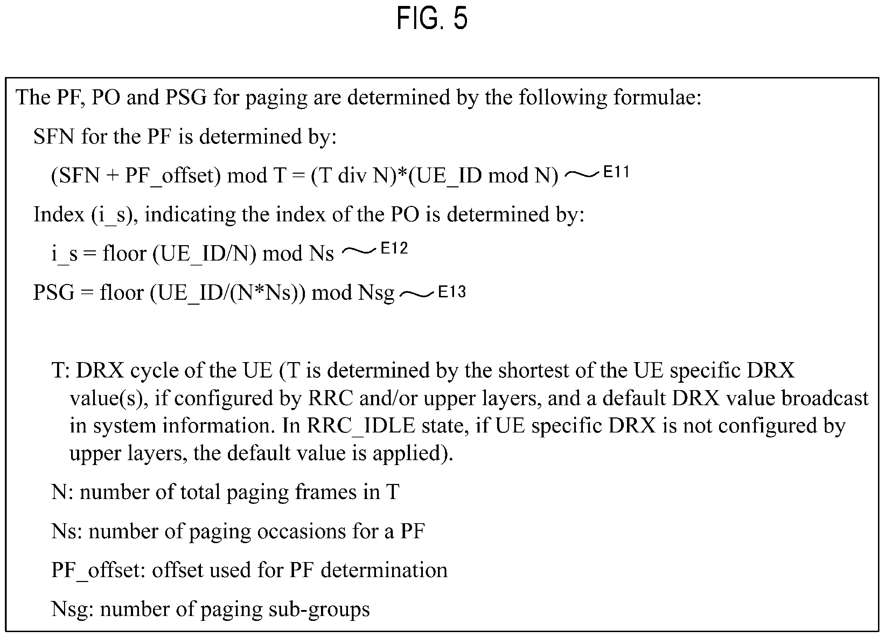

In the second grouping method, the UE 100 determines the paging subgroup on the basis of a unique identifier (For example, 5G-S-TMSI (Temporary Mobile Subscriber Identifier)) of the UE 100 itself. Specifically, the UE 100 calculates a user equipment identity (UE ID) from the unique identifier of the UE 100 itself, and calculates a paging subgroup (specifically, a paging subgroup ID (UE subgroup ID)) to which the UE 100 belongs from the calculated user equipment identity. As a formula for calculating the paging subgroup identifier from the user equipment identity, a formula "UE subgroup ID = floor (UE_ID/(N * Ns)) mod Nsg" has been proposed. N is a total number of PFs in a DRX cycle of the UE 100 in the cell, Ns is a number of POs per PF in the cell, and Nsg is a number of paging subgroups (Specifically, the maximum number of paging subgroups per PO in the cell in which the UE 100 exists.) in the cell (see Fig. 5). Note that 5G-S-TMS is a temporary mobile subscription identifier.

Before transmitting the paging message, the network 10 (base station 200) notifies each of the UEs 100 of the paging subgroup to which the UE 100 of the transmission destination of the paging message belongs. For example, prior to PO, the network 10 (base station 200) notifies each UE 100 of the paging subgroup ID to which the UE 100 called in the paging message transmitted in the PO belongs (so-called paging early indication). The network 10 notifies each UE 100 of the paging subgroup ID using, for example, a reference signal/synchronization signal.

Each UE 100 in the RRC idle state or the RRC inactive state wakes up at the PO and performs paging monitoring only when the paging subgroup ID to which the UE 100 belongs is notified (That is, it belongs to the notified paging subgroup.). As a result, since the UEs 100 belonging to some paging subgroups do not wake up in the PO, the occurrence of extra power consumption is suppressed.

In addition, in order to notify each UE 100 of the paging subgroup to which the UE 100 of the transmission destination of the paging message belongs, for example, the network 10 (base station 200) may transmit downlink control information (DCI) including the paging subgroup ID to which the UE 100 called in the paging message transmitted in PO belongs on the PDCCH. The UE 100 receives (decodes), on the PDCCH, the DCI to which a CRC (Cyclic Redundancy Check) parity bit scrambled by a P-RNTI (Paging Radio Network Temporary Identifier) is added. Here, the base station 200 may configure the P-RNTI for the UE 100. Further, the DCI may be a DCI format used for scheduling a physical downlink shared channel (PDSCH). The DCI to which the CRC parity bit scrambled by the P-RNTI is added is also referred to as paging DCI.

When the paging subgroup ID included in the DCI indicates the paging subgroup to which the UE 100 itself belongs, the UE 100 that has received (decoded) the PDCCH determines that the UE 100 itself belongs to the notified paging subgroup. Only in a case where the UE 100 belongs to the notified paging subgroup, the UE 100 performs reception processing (specifically, reception and decoding of the PDSCH) of the paging message and determines whether or not the unique identifier of the UE 100 is included in the paging message. In a case where the UE 100 determines that the UE 100 itself does not belong to the notified paging subgroup, the UE 100 can skip the reception processing of the paging message in the paging occasion, so that the power consumption can be reduced.

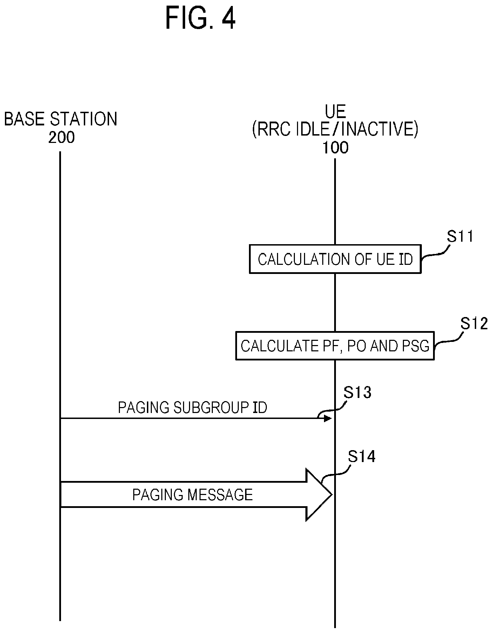

Fig. 4 illustrates an operation example in a case where the UE 100 in the RRC idle state or the RRC inactive state determines a paging subgroup (the above-described second grouping method). The UE 100 exists in a cell managed by the base station 200. The cell may be a cell selected by the UE 100 by cell (re) selection, and may be referred to as a camp-on-cell.

In step S11, the UE 100 in the RC idle state or the RRC inactive state determines the user equipment identity (UE_ID) on the basis of the unique identifier of the UE 100.

In step S12, the UE 100 calculates (determines) the paging frame, the paging occasion, and the paging subgroup.

As illustrated in Fig. 5, the UE 100 calculates a paging frame (Specifically, a system frame number (SFN) which is a paging frame.) on the basis of the calculated user equipment identity by using Formula E11. The UE 100 calculates a paging occasion (Specifically, an index (i_s) of a paging occasion) on the basis of the calculated user equipment identity by using Formula E12. The UE 100 calculates a paging subgroup (PSG) on the basis of the calculated user equipment identity by using Formula E13. The calculated paging subgroup is a paging subgroup to which the UE 100 belongs.

In step S13, before transmitting the paging message, the network 10 (base station 200) notifies each of the UEs 100 of the paging subgroup ID to which the UE 100 of the transmission destination of the paging message belongs. The UE 100 receives the paging subgroup ID from the base station 200 in the cell in which the UE 100 exists.

The UE 100 determines whether or not it belongs to the notified paging subgroup. Specifically, when the calculated paging subgroup and the notified paging subgroup ID match, the UE 100 determines whether or not it belongs to the notified paging subgroup. Otherwise, the UE 100 determines that it does not belong to the notified paging subgroup. The UE 100 performs the following processing only when the UE 100 belongs to the notified paging subgroup. Therefore, the UE 100 maintains the wake-up state to receive the paging message from the base station 200. On the other hand, in a case where the UE 100 does not belong to the notified paging subgroup, the UE 100 may transition to a sleep state in which the following processing is not executed.

In step S14, the network 10 (base station 200) transmits a paging message. The UE 100 receives the paging message from the base station 200 in the cell. The UE 100 determines whether or not its own unique identifier is included in the paging message. In a case where its own unique identifier of the UE 100 is included in the paging message, the UE 100 regards that there is a call and performs an operation of transitioning to the RRC connected state, for example. On the other hand, in a case where its own unique identifier is not included in the paging message, for example, the UE 100 may transition to the sleep state.

Meanwhile, in step S11 described above, a case is assumed in which the paging subgroup is calculated from the UE_ID calculated using the formula "UE_ID = 5G-S-TMSI mod 1024" defined in the current technical specification of the 3GPP using the Formula E13. Here, the maximum values of N, Ns, and Nsg that can be configured as N defined in the current technical specification of the 3GPP are 256, 4, and 8, respectively. Therefore, there is a possibility that a condition of "N * Ns * Nsg > 1024" is fulfilled. When this condition is fulfilled, for example, when N is 256 and Ns is 4, all user equipments allocated to a same paging occasion belong to a same paging subgroup, and an appropriate paging subgroup ID cannot be allocated to each UE 100.

In addition, in a case where the UE_ID is calculated by the formula "UE_ID = 5G-S-TMSI mod 1024 * Nsg", in a case where the UE_ID is calculated, the number of UE_IDs increases as compared with the calculation method by "UE_ID = 5G-S-TMSI mod 1024" defined in the current technical specification of the 3GPP, and thus, the number of bits required to indicate the UE_ID increases. As a result, for example, there is a problem that the information amount of the UE_ID increases when the UE_ID is transmitted between the base stations. In an embodiment to be described later, an operation for enabling suppression of an increase in the information amount of the UE_ID will be described.

### (Configuration of User Equipment)

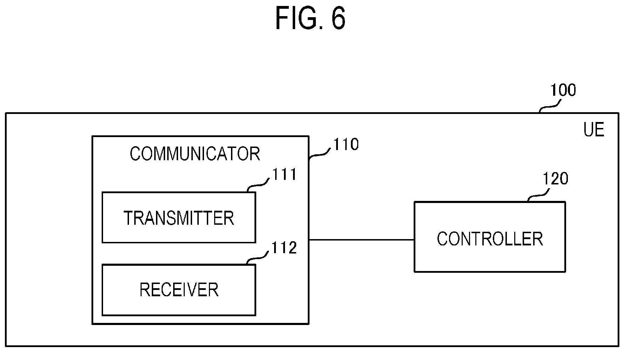

A configuration of the UE 100 according to the embodiment will be described with reference to Fig. 6. The UE 100 includes a communicator 110 and a controller 120.

The communicator 110 performs radio communication with the base station 200 by transmitting and receiving a radio signal to and from the base station 200. The communicator 110 includes at least one transmitter 111 and at least one receiver 112. The transmitter 111 and the receiver 112 may include a plurality of antennas and RF circuits. The antenna converts a signal into a radio wave and emits the radio wave into space. Furthermore, the antenna receives a radio wave in space and converts the radio wave into a signal. The RF circuit performs analog processing of a signal transmitted and received via the antenna. The RF circuit may include a high frequency filter, an amplifier, a modulator, a low pass filter, and the like.

The controller 120 performs various types of control in the UE 100. The controller 120 controls communication with the base station 200 via the communicator 110. The operation of the UE 100 described above and described later may be an operation under the control of the controller 120. The controller 120 may include at least one processor capable of executing a program and a memory that stores the program. The processor may execute the program to perform the operation of the controller 120. The controller 120 may include a digital signal processor that executes digital processing of a signal transmitted and received via the antenna and the RF circuit. The digital processing includes processing of a protocol stack of the RAN. The memory stores a program executed by the processor, a parameter related to the program, and data related to the program. The memory may include at least one of an ROM (Read Only Memory), an EPROM (Erasable Programmable Read Only Memory), an EEPROM (Electrically Erasable Programmable Read Only Memory), an RAM (Random Access Memory), or a flash memory. All or part of the memory may be included in the processor.

In the UE 100 configured as described above, when the UE 100 is in the RRC idle state or the RRC inactive state, the controller 120 calculates, on the basis of the UE_ID, the PO in which the UE 100 is likely to receive the paging message. The receiver 112 receives the paging message in the cell in which the UE 100 exists from the base station 200 that manages the cell in the calculated PO. The controller 120 selects one of the first calculation formula and the second calculation formula on the basis of whether or not the paging subgroup to which some of the plurality of UEs 100 allocated to the same paging occasion belong is configured in the UE 100, and calculates the UE_ID using the selected calculation formula. The number of bits required to indicate the UE_ID calculated by the second calculation formula is shorter than the number of bits required to indicate the UE_ID calculated by the first calculation formula. As a result, in a case where the UE 100 (the controller 120) selects the second calculation formula, the number of bits required for transmitting the UE_ID becomes smaller than that in a case where the first calculation formula is selected, and an increase in the information amount of the UE_ID can be suppressed.

### (Configuration of Base Station)

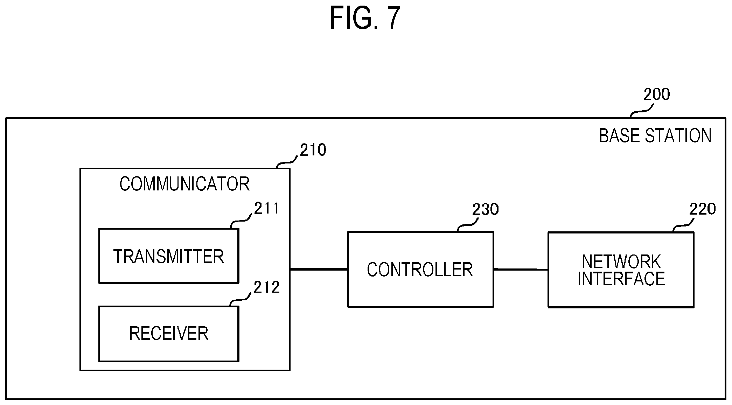

A configuration of the base station 200 according to the embodiment will be described with reference to Fig. 7. The base station 200 includes a communicator 210, a network interface 220, and a controller 230.

For example, the communicator 210 receives a radio signal from the UE 100 and transmits a radio signal to the UE 100. The communicator 210 includes at least one transmitter 211 and at least one receiver 212. The transmitter 211 and the receiver 212 may include an RF circuit. The RF circuit performs analog processing of a signal transmitted and received via the antenna. The RF circuit may include a high frequency filter, an amplifier, a modulator, a low pass filter, and the like.

The network interface 220 transmits and receives a signal to and from a network. The network interface 220 receives a signal from an adjacent base station connected via an Xn interface which is an interface between base stations, for example, and transmits a signal to the adjacent base station. In addition, the network interface 220 receives a signal from the core network apparatus 300 connected via the NG interface, for example, and transmits a signal to the core network apparatus 300.

The controller 230 performs various types of control in the base station 200. The controller 230 controls, for example, communication with the UE 100 via the communicator 210. Furthermore, the controller 230 controls, for example, communication with a node (for example, the adjacent base station and the core network apparatus 300) via the network interface 220. The operation of the base station 200 described above and described later may be an operation under the control of the controller 230. The controller 230 may include at least one processor capable of executing a program and a memory that stores the program. The processor may execute the program to perform the operation of the controller 230. The controller 230 may include a digital signal processor that executes digital processing of a signal transmitted and received via an antenna and an RF circuit. The digital processing includes processing of a protocol stack of the RAN. The memory stores a program executed by the processor, a parameter related to the program, and data related to the program. All or part of the memory may be included in the processor.

The base station 200 configured in this manner manages a cell in which the UE 100 exists. In a case where the UE 100 is in the RRC idle state or the RRC inactive state, the controller 230 calculates a PO in which the UE 100 is likely to receive the paging message on the basis of the UE_ID. The transmitter 211 transmits the paging message to the UE 100 in the cell at the calculated PO. The controller 230 selects one of the first calculation formula and the second calculation formula on the basis of whether or not the paging subgroup to which some of the plurality of UEs 100 allocated to the same PO belong is configured in the UE 100, and calculates the UE_ID using the selected calculation formula. The number of bits required to indicate the UE_ID calculated by the second calculation formula is shorter than the number of bits required to indicate the UE_ID calculated by the first calculation formula. As a result, in a case where the second calculation formula is selected, the number of bits required for transmitting the UE_ID is smaller than that in a case where the first calculation formula is selected, and an increase in the information amount of the UE_ID can be suppressed.

Note that the UE_ID is transmitted from the base station 200 in which the RAN paging is triggered to another base station 200 via the Xn interface by the RAN paging message, for example.

### (Operation of Mobile Communication System)

### (1) First operation example

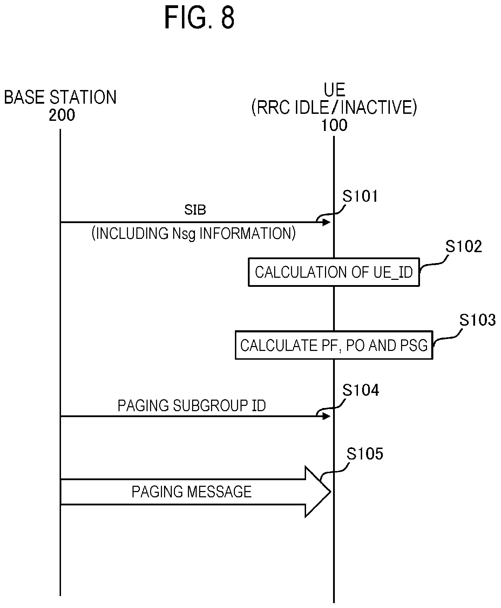

A first operation example of the mobile communication system 1 will be described with reference to Figs. 8 to 10. Note that differences from the above-described operation example will be mainly described.

As illustrated in Fig. 8, in step S101, the base station 200 (transmitter 211) transmits Nsg information indicating the number of paging subgroups (Nsg) in a cell managed by the base station 200. The base station 200 (transmitter 211) may transmit, for example, a system information block (SIB) including the Nsg. The UE 100 (receiver 112) receives the Nsg information in the cell in which the UE 100 exists.

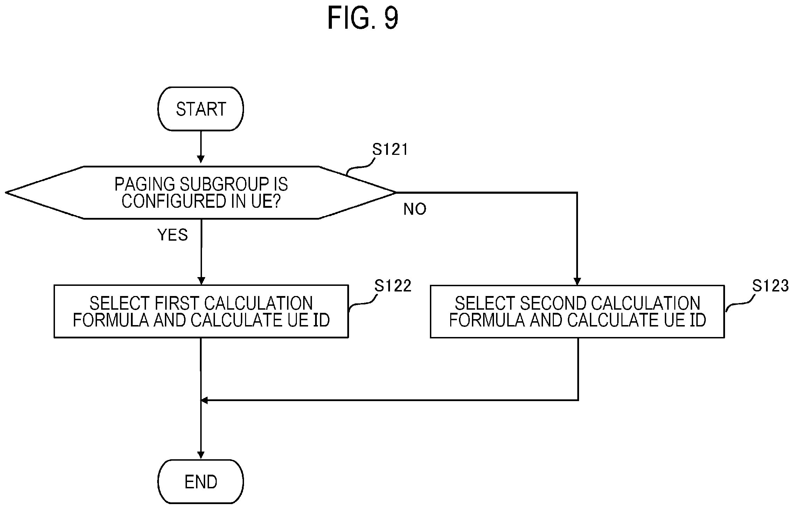

In step S102, the UE 100 (the controller 120) calculates the user equipment identity (UE_ID). Specifically, the UE 100 (the controller 120) selects one of the first calculation formula and the second calculation formula to be described later on the basis of whether or not the paging subgroup to which some of the plurality of UEs 100 allocated to the same PO belong is configured in the UE 100. The UE 100 (the controller 120) calculates the UE_ID using the selected calculation formula. Fig. 9 illustrates an operation example of the UE 100.

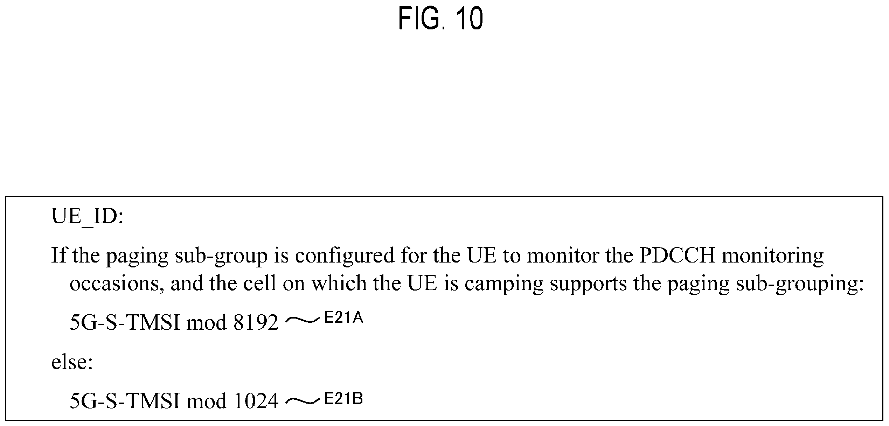

As illustrated in Fig. 9, in step S121, the UE 100 (the controller 120) determines whether or not a paging subgroup (PSG) is configured in the UE 100. The UE 100 (the controller 120) may determine that the PSG is configured in the UE 100 in at least one of the following cases. Note that the configuration of the paging subgroup may be a configuration for the UE 100 (the controller 120) to monitor the PDCCH monitoring occasion (that is, monitor paging) (see Fig. 10).

Firstly, the UE 100 (the controller 120) may determine that the PSG is configured in the UE 100 when Nsg is notified from the network 10 (the base station 200). Therefore, the UE 100 (the controller 120) may determine that the PSG is configured in the UE 100 when the Nsg information is received in the cell in which the UE 100 exists.

Secondly, the UE 100 (the controller 120) may determine that the PSG is configured in the UE 100 when receiving the information related to the configuration of the paging subgroup from the network 10 (the base station 200). For example, when receiving the information indicating that the paging subgroup is determined by the second grouping method, the UE 100 (the controller 120) may determine that the PSG is configured in the UE 100.

In a case where it is determined that the PSG is configured in the UE 100, the UE 100 (the controller 120) executes the processing of step S122. On the other hand, in a case of determining that the PSG is not configured in the UE 100, the UE 100 (the controller 120) executes the processing of step S123.

In step S122, the UE 100 (the controller 120) selects the first calculation formula. The UE 100 (the controller 120) calculates the UE_ID using the selected first calculation formula.

For example, the first calculation formula is "UE ID = unique identifier mod Y of the user equipment". The unique identifier of the user equipment is, for example, 5G-S-TMSI. Y may be a fixed value obtained by multiplying 1024 by the maximum value of the configurable number of PSGs defined in the technical specification of the mobile communication system 1. In a current technical specification of 3GPP, a maximum value of the configurable number of PSGs is 8. For example, as illustrated in Fig. 10, the UE 100 (the controller 120) calculates UE_ID by using Formula E21A as the first calculation formula. In Formula E21A, the fixed value is 8192 (= 1024 × 8). Note that the fixed value may be a value larger than N * Ns * Nsg.

In step S123, the UE 100 (the controller 120) selects the second calculation formula. The UE 100 (the controller 120) calculates the UE_ID using the selected second calculation formula.

For example, as illustrated in Fig. 10, the second calculation formula is a Formula E21B of "UE_ID = 5G-S-TMSI mod 1024" defined in the current technical specification of 3GPP.

The number of bits required to indicate the UE_ID calculated by the second calculation formula is shorter than the number of bits required to indicate the UE_ID calculated by the first calculation formula. In the present operation example, the UE_ID calculated by the second calculation formula is indicated by 10 bits (= log2 (1024)), whereas the UE_ID calculated by the first calculation formula is indicated by 13 bits (= log2 (8192)).

Referring back to Fig. 8, in step S103, the UE 100 (the controller 120) calculates PF, PO, and PSG. For example, the UE 100 (the controller 120) calculates PF by using Formula E11, calculates PO by using Formula E12, and calculates PSG by using Formula E13.

Steps S104 and S105 are similar to steps S13 and S14. Note that the base station 200 (the controller 230) calculates UE_ID, PF, PO, and PSG similarly to the UE 100. The base station 200 (the controller 230, transmitter 211) performs paging transmission operation on the basis of the calculated UE_ID, PF, PO, and PSG.

Specifically, when paging addressed to the UE 100 is triggered, the base station 200 (the controller 230) calculates the UE_ID of the UE 100 and calculates the PSG (paging subgroup ID) on the basis of the calculated UE_ID. The base station 200 (transmitter 211) notifies each UE 100 of the calculated paging subgroup ID before transmitting the paging message. Thereafter, the base station 200 (transmitter 211) transmits a paging message including the unique identifier of the UE 100.

As described above, the UE 100 (the controller 120) calculates the UE_ID using the Formula E21A (UE_ID = 5G-S-TMSI mod 8192), and thus, even in a case where the formula "UE subgroup ID = floor (UE_ID/(N * Ns)) mod Nsg" is used as the formula for calculating the paging subgroup ID from the UE_ID, since all the UEs 100 allocated to the same paging occasion do not belong to the same PSG, an appropriate paging subgroup ID is allocated to each UE 100.

When the PSG is not configured in the UE 100 (the controller 120), the UE 100 selects the second calculation formula. Therefore, the number of bits required for transmitting the UE_ID is smaller than that in a case where the first calculation formula is selected, and an increase in the information amount of the UE_ID can be suppressed.

In addition, the first calculation formula is "UE_ID = unique identifier mod Y of the user equipment", and Y is a fixed value obtained by multiplying 1024 by the maximum value of the number of PSGs that can be configured defined in the technical specification of the mobile communication system 1. As a result, the UE 100 (the controller 120) can omit, for example, the management of the variable value and the like as compared with the case where Y is the variable value (for example, Nsg) that can be changed for each cell, and thus, the processing for calculating the UE_ID becomes simple.

### (2) Second operation example

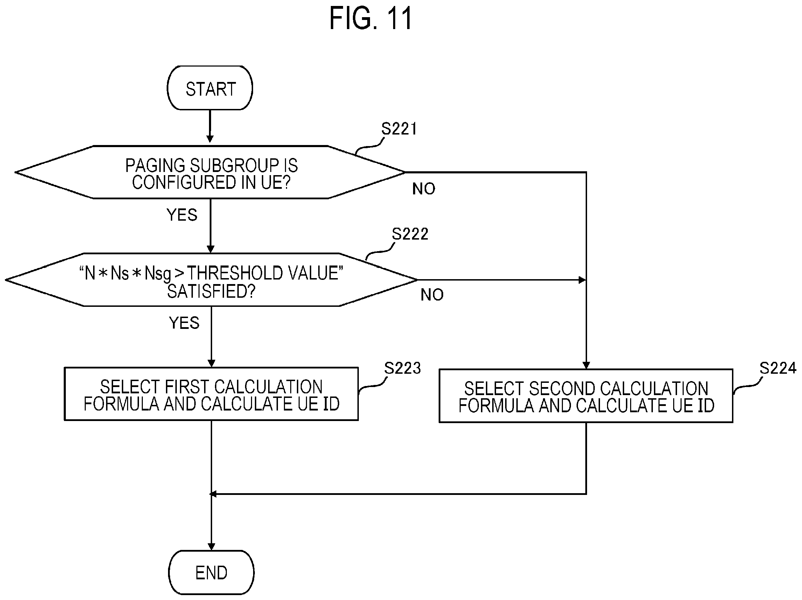

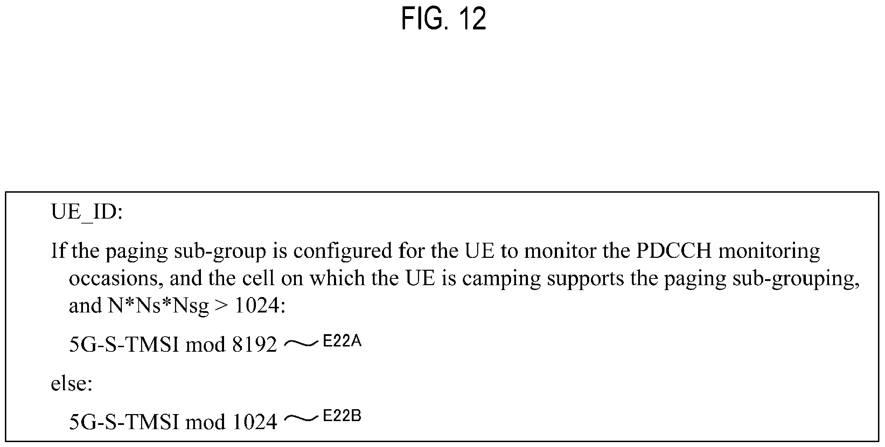

With reference to Figs. 11 and 12, the second operation example will be described focusing on differences from the above-described operation example. In the second operation example, the UE 100 selects the first calculation formula in a case where a condition of "N * Ns * Nsg > threshold value" is fulfilled, and selects the second calculation formula in a case where the condition is not fulfilled.

As illustrated in Fig. 11, step S221 is similar to step S121. In a case where it is determined that the PSG is configured in the UE 100, the UE 100 (the controller 120) executes the processing of step S222. On the other hand, in a case of determining that the PSG is not configured in the UE 100, the UE 100 (the controller 120) executes the processing of step S223.

In step S222, the UE 100 (the controller 120) determines whether or not a condition of "N * Ns * Nsg > threshold value" is fulfilled.

The threshold value is a value obtained by multiplying the maximum value of the total PF that can be configured as N defined in the technical specification of the mobile communication system 1 by the maximum value of the PO that can be configured as Ns defined in the technical specification of the mobile communication system 1. In the current technical specification of 3GPP, a maximum value of total PF that can be configured as N is 256, and a maximum value of PO that can be configured as Ns is 4. Therefore, as illustrated in Fig. 12, the threshold value is 1024 (= 256 × 4), and the condition is "N * Ns * Nsg > 1024".

In a case where the condition is fulfilled, the UE 100 (the controller 120) executes the processing of step S223. On the other hand, the UE 100 (the controller 120) executes the process of step S224 in a case where the condition is fulfilled.

In step S223, the UE 100 (the controller 120) selects Formula E22A as the first calculation formula, for example, as illustrated in Fig. 12. In the present operation example, Formula E22A is the same as Formula E21A.

In step S224, the UE 100 (the controller 120) selects Formula E22B as the second calculation formula, for example, as illustrated in Fig. 12. In the present operation example, Formula E22B is the same as Formula E21B.

As described above, in a case where the condition of "N * Ns * Nsg > 1024" is fulfilled, the UE 100 (the controller 120) calculates the UE_ID by using the Formula E22A (UE_ID = 5G-S-TMSI mod 8192), and thus, even in a case where the formula of "UE subgroup ID = floor (UE_ID/(N * Ns)) mod Nsg" is used as the formula for calculating the paging subgroup ID from the UE_ID, since all the UEs 100 allocated to the same paging occasion do not belong to the same PSG, an appropriate paging subgroup ID is allocated to each UE 100.

In addition, in a case where the condition of "N * Ns * Nsg > 1024" is not fulfilled, the UE 100 (the controller 120) selects the second calculation formula even if the PSG is configured in the UE 100. Therefore, the number of bits required for transmitting the UE_ID is smaller than that in a case where the first calculation formula is selected, and an increase in the information amount of the UE_ID can be suppressed.

### (3) Third operation example

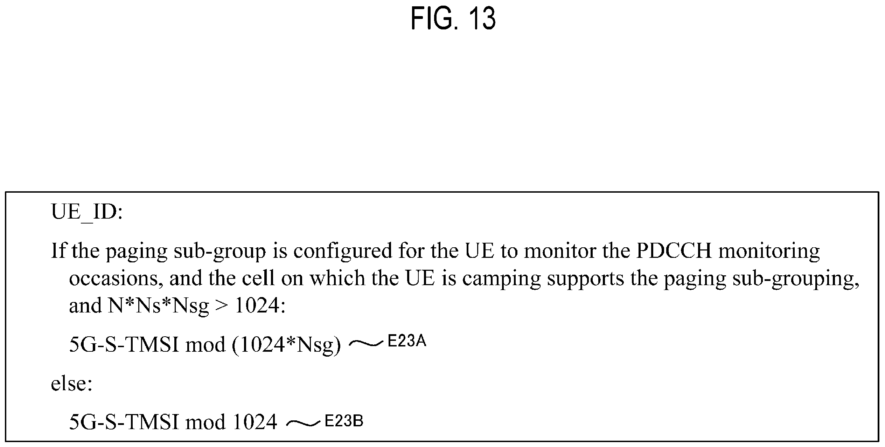

With reference to Fig. 13, the third operation example will be described focusing on differences from the above-described operation example. In the third operation example, the UE 100 (the controller 120) selects a formula different from the above-described operation example as the first calculation formula. The flowchart of the UE 100 (the controller 120) in the present operation example is similar to that in the second operation example.

In step S223, the UE 100 (the controller 120) selects Formula E23A as the first calculation formula, for example, as illustrated in Fig. 13. In the present operation example, the Formula E23Ais "UE_ID = unique identifier of user equipment mod Z". Z is a value obtained by multiplying 1024 by Nsg.

In step S224, the UE 100 (the controller 120) selects Formula E23B as the second calculation formula, for example, as illustrated in Fig. 12. In the present operation example, Formula E23B is the same as Formula E21B.

As described above, when the condition of "N * Ns * Nsg > 1024" is fulfilled, the UE 100 (the controller 120) calculates the UE_ID by using the Formula E23A, and thus, even when the formula of "UE subgroup ID = floor (UE_ID/(N * Ns)) mod Nsg" is used as the formula for calculating the paging subgroup ID from the UE ID, since all the UEs 100 allocated to the same paging occasion do not belong to the same PSG, an appropriate paging subgroup ID is allocated to each UE 100.

In addition, the UE 100 (the controller 120) calculates the UE_ID by using the Formula E23A, and thus, in a case where the Nsg is smaller than 8, the number of bits required for transmitting the UE_ID is smaller than that in a case where the formula 21A or the formula 22A is used, and an increase in the information amount of the UE_ID can be suppressed.

In addition, in a case where the condition of "N * Ns * Nsg > 1024" is not fulfilled, the UE 100 (the controller 120) selects the second calculation formula even if the PSG is configured in the UE 100. Therefore, the number of bits required for transmitting the UE_ID is smaller than that in a case where the first calculation formula is selected, and an increase in the information amount of the UE_ID can be suppressed.

### (Other Embodiments)

In the above-described embodiment, the second calculation formula is "UE ID = 5G-S-TMSI mod 1024" defined in the current technical specification of 3GPP, but another calculation formula may be used.

The operation sequence (and the operation flow) in the above-described embodiment may not necessarily be executed in time series according to the order described in the flow diagram or the sequence diagram. For example, the steps in the operation may be executed in an order different from the order described as the flow diagram or the sequence diagram, or may be executed in parallel. In addition, some of the steps in the operation may be removed and additional steps may be added to the processing. Furthermore, the operation sequence (and the operation flow) in the above-described embodiment may be performed separately and independently, or may be performed by combining two or more operation sequences (and operation flows). For example, some steps of one operation flow may be added to another operation flow, or some steps of one operation flow may be replaced with some steps of another operation flow.

In the above-described embodiments, a mobile communication system based on the NR is described as an example of the mobile communication system 1. However, the mobile communication system 1 is not limited to this example. The mobile communication system 1 may be a system conforming to a TS of LTE (Long Term Evolution) or another generation system (for example, the sixth generation) of the 3GPP standard. The base station 200 may be an eNB that provides E-UTRAuser plane and control plane protocol terminations towards the UE 100 in LTE. The mobile communication system 1 may be a system conforming to a TS defined in a standard other than the 3GPP standard. The base station 200 may be an IAB (Integrated Access and Backhaul) donor or an IAB node.

A program for causing a computer to execute each processing performed by the UE 100 or the base station 200 may be provided. The program may be recorded on a computer readable medium. The program can be installed in the computer by using the computer readable medium. Here, the computer readable medium on which the program is recorded may be a non-transitory recording medium. The non-transitory recording medium is not particularly limited to, but may be, for example, a recording medium such as a CD-ROM (Compact Disk Read Only Memory) or a DVD-ROM (Digital Versatile Disc Read Only Memory). Furthermore, a circuit that executes each processing to be performed by the UE 100 or the base station 200 may be integrated, and at least a part of the UE 100 or the base station 200 may be configured as a semiconductor integrated circuit (chipset, SoC (System On Chip)).

In the above-described embodiment, "transmit (transmit)" may mean to perform processing of at least one layer in a protocol stack used for transmission, or may mean to physically transmit a signal wirelessly or by wire. Alternatively, "transmit" may mean a combination of performing the processing of at least one layer and physically transmitting a signal wirelessly or by wire. Similarly, "receive (receive)" may mean to perform processing of at least one layer in a protocol stack used for reception, or may mean to physically receive a signal wirelessly or by wire. Alternatively, "receive" may mean a combination of performing the processing of at least one layer and physically receiving a signal wirelessly or by wire. Similarly, "acquire (obtain/acquire)" may mean to acquire information from stored information, may mean to acquire information from information received from another node, or may mean to acquire the information by generating information. Similarly, the appearances of "based on" and "depending on/in response to" do not mean "based only on" or "depending only on" unless explicitly stated otherwise. The description "based on" means both "based only on" and "based at least in part on". Similarly, the description "depending on/in response to" means both "depending only on" and "depending at least in part on". Similarly, "include (include)" and "comprise (comprise)" do not mean to include only the listed items, but mean that the terms may include only the listed items or may include additional items in addition to the listed items. Similarly, in the present disclosure, "or (or)" does not mean exclusive OR but means OR. Moreover, any reference to elements using designations such as "first," "second," and the like as used in the present disclosure does not generally limit the amount or order of those elements. These designations may be used in this disclosure as a convenient way to distinguish between two or more elements. Thus, references to first and second elements do not imply that only two elements may be employed therein or that the first element must precede the second element in any way. In the present disclosure, when articles such as a, an, and the in English are added by translation, these articles include a plurality of articles unless the context clearly indicates otherwise.

Although the present disclosure has been described in accordance with examples, it is understood that the present disclosure is not limited to the examples and structures. The present disclosure also includes various modifications and modifications within an equivalent range. In addition, various combinations and modes, and other combinations and modes including only one element, more elements, or less elements are also within the scope and idea of the present disclosure.

### (Supplementary Notes)

Features related to the above-described embodiment are additionally described.

### (Supplementary Note 1)

A communication apparatus comprising:
a receiver configured to receive, from a network, first information indicating a number of subgroups per paging occasion and second information related to a configuration of the subgroups based on a user equipment identity (UE_ID); and
a controller configured to calculate the UE_ID using a designated calculation formula on a basis of the first information and the second information, and calculate a subgroup identifier on a basis of the UE_ID calculated using the designated calculation formula, wherein
the receiver monitors a paging occasion on a basis of the subgroup identifier.

### (Supplementary Note 2)

The communication apparatus according to supplementary note 1, wherein
the designated calculation formula is a formula based on 5G-S-TMSI which is a temporary mobile subscription identifier.

### (Supplementary Note 3)

The communication apparatus according to supplementary note 1 or 2, wherein
the designated calculation formula is a first calculation formula, and the controller
calculates the UE_ID by using a second calculation formula different from the first calculation formula on a basis of a fact that the second information has not been received, and
monitors a paging occasion on a basis of the UE_ID calculated using the second calculation formula.

### (Supplementary Note 4)

The communication apparatus according to supplementary note 3, wherein
the second calculation formula is a formula based on 5G-S-TMSI which is a temporary mobile subscription identifier.

### (Supplementary Note 5)

A base station comprising:
a transmitter configured to transmit, to a communication apparatus, first information indicating a number of subgroups per paging occasion and second information related to a configuration of the subgroups based on a user equipment identity (UE_ID); and
a controller configured to calculate the UE_ID using a designated calculation formula on a basis of the first information and the second information, and calculate a subgroup identifier on a basis of the UE_ID calculated using the designated calculation formula, wherein
the transmitter transmits downlink control information on a physical link control channel in a paging occasion based on the subgroup identifier.

### (Supplementary Note 6)

A communication method executed by a communication apparatus, the communication method comprising the steps of:
receiving, from a network, first information indicating a number of subgroups per paging occasion, and second information related to a configuration of the subgroups based on a user equipment identity (UE_ID);
calculating the UE_ID using a designated calculation formula on a basis of the first information and the second information, and calculating a subgroup identifier on a basis of the UE_ID calculated using the designated calculation formula; and
monitoring a paging occasion on a basis of the subgroup identifier.

## Claims

1. A communication apparatus (100) comprising:
a receiver (112) configured to receive, from a network (10), first information indicating a number of subgroups per paging occasion and second information related to a configuration of the subgroups based on a user equipment identity (UE_ID); and
a controller (120) configured to calculate the UE_ID using a designated calculation formula on a basis of the first information and the second information, and calculate a subgroup identifier on a basis of the UE_ID calculated using the designated calculation formula, wherein
the receiver monitors a paging occasion on a basis of the subgroup identifier.

2. The communication apparatus according to claim 1, wherein
the designated calculation formula is a formula based on 5G-S-TMSI which is a temporary mobile subscription identifier.

3. The communication apparatus according to claim 1 or 2, wherein
the designated calculation formula is a first calculation formula, and
the controller
calculates the UE_ID by using a second calculation formula different from the first calculation formula on a basis of a fact that the second information has not been received, and
monitors a paging occasion on a basis of the UE_ID calculated using the second calculation formula.

4. The communication apparatus according to claim 3, wherein
the second calculation formula is a formula based on 5G-S-TMSI which is a temporary mobile subscription identifier.

5. A base station (200) comprising:
a transmitter (211) configured to transmit, to a communication apparatus (100), first information indicating a number of subgroups per paging occasion and second information related to a configuration of the subgroups based on a user equipment identity (UE_ID); and
a controller (230) configured to calculate the UE_ID using a designated calculation formula on a basis of the first information and the second information, and calculate a subgroup identifier on a basis of the UE_ID calculated using the designated calculation formula, wherein
the transmitter transmits downlink control information on a physical link control channel in a paging occasion based on the subgroup identifier.

6. A communication method executed by a communication apparatus (100), the communication method comprising the steps of:
receiving, from a network (10), first information indicating a number of subgroups per paging occasion, and second information related to a configuration of the subgroups based on a user equipment identity (UE_ID);
calculating the UE_ID using a designated calculation formula on a basis of the first information and the second information, and calculating a subgroup identifier on a basis of the UE_ID calculated using the designated calculation formula; and
monitoring a paging occasion on a basis of the subgroup identifier.
